# EUROPÄISCHE PATENTSCHRIFT

(11) **EP 2 851 112 B1**
(45) Veröffentlichungstag und Bekanntmachung des Hinweises auf die Patenterteilung: **15.11.2017**
(21) Anmeldenummer: 14182425.0
(22) Anmeldetag: 27.08.2014
(51) Int. Cl.: B01D 46/00, B01D 46/24

(54) **Filterelement und Filtersystem mit einem Filterelement**
Filter element and filter system with a filter element
Élément de filtre et système de filtre équipé d'un élément de filtre

(30) Priorität: 02.09.2013 DE 102013014489
(43) Veröffentlichungstag der Anmeldung: 25.03.2015
(73) Patentinhaber: MANN + HUMMEL GMBH, 71636 Ludwigsburg (DE)
(72) Erfinder: Kaufmann, Michael, 67149 Meckenheim (DE); Ruhland, Klaus-Dieter, 67149 Meckenheim (DE)

(56) Entgegenhaltungen:
- EP-A1- 2 764 904
- EP-A1- 2 764 905
- WO-A1-2009/146962
- DE-A1-102010 011 722
- DE-A1-102011 005 942
- DE-U1- 29 780 439
- DE-U1-202007 013 822
- US-A1- 2004 134 171
- US-A1- 2007 163 945
- US-B1- 6 610 198

## Beschreibung

### Technisches Gebiet

Die Erfindung betrifft ein Filterelement, insbesondere zur Verwendung als Luftfilter einer Brennkraftmaschine, sowie ein Filtersystem zum Einbau eines solchen Filterelements.

### Stand der Technik

Aus der DE 29780439 U1 sind Luftfilterkonstruktionen bekannt, bei denen das Filterelement und das Gehäuse so konstruiert sind, dass ein "Vorreinigungs"-Vorgang stattfindet, der bereits gröberen Schmutz aus der Luft entfernt, bevor diese mit dem Filterelement in Kontakt kommt. Zum Beispiel sind Gehäuse für einen dort hineingelenkten Luftstrom konstruiert, der zuerst in einer Kreisströmung oder einem schraubenförmigen Muster um das Filterelement herum (oder dieses umschreibend) gelenkt wird, so dass gröbere Schmutzpartikel oder Schwebstoffteilchen auf Grund eines Zykloneffektes bereits abgeschieden werden.

In konventionellen Systemen ist mit dem Luftstrom an der Eintrittsöffnung in das System ein erhebliches Maß an Turbulenz verbunden. Solche Turbulenz kann die Falten des als Filtermedium verwendeten Papiermediums an dieser Stelle beanspruchen oder schwächen, was eine Schwächung oder manchmal Versagen des Papiermediums an dieser Stelle bewirkt. In einigen Systemen umfasst das Gehäuse eine Innenstruktur, um dieses zu verhindern. Außerdem kann der Luftstrom in der Nähe des Lufteintrittes in das kreisförmige Strömungssystem bis zu einem gewissen Ausmaß an das gefaltete Papiermedium geführt werden, insbesondere, wenn das Gehäuse an dieser Stelle keine Schutzstruktur umfasst. Dieses kann vorzeitiges Zusetzen des Filtermediums an dieser Stelle mit größeren Schwebstoffteilchen bewirken. Außerdem können die Schwebstoffteilchen, wenn sie an dieser Stelle an das Medium geführt werden, das Medium beschädigen.

In der DE 29780439 U1 umfasst das Filterelement deshalb eine Auskleidung, die einen mechanischen Schutz des Filterelements darstellt, einen Bereich aus Filtermedium und eine Schirmanordnung. Die Auskleidung hat offene Bereiche für den Durchgang von Luft. Die Schirmanordnung ist an einem gelochten oder offenen Teil der Auskleidung entlang ihrer luftstromabwärtsliegenden Fläche in so einer Position angeordnet, dass sie einen verbundenen Teil der Auskleidung vom direkten Hindurchströmen von Luft und in einen Teil des Bereiches des Filtermediums abschirmt. Die Auskleidung kann aus Streckmetall bestehen, während die Schirmanordnung aus einem Polymerfilm oder -folie bestehen kann.

### Offenbarung der Erfindung

Eine Aufgabe der Erfindung ist es, ein Filterelement mit einem Anströmschutz gegen direkte Anströmung eines Filtermediums zu schaffen, der effizient und kostengünstig hergestellt werden kann.

Eine weitere Aufgabe der Erfindung ist es, ein Filtersystem zur Aufnahme eines solchen austauschbaren Filterelements mit einem Anströmschutz zu schaffen, der effizient und kostengünstig hergestellt werden kann.

Die vorgenannten Aufgaben werden nach einem Aspekt der Erfindung gelöst bei einem Filterelement, bei dem eine äußere Mantelfläche eines aus einem zickzackförmig gefalteten (plissierten) Filterbalg bestehenden Filterkörpers zumindest einen fluiddichten Bereich aufweist, der für das zu filternde Medium undurchlässig ist und der als auf der äußeren Mantelfläche des Filterkörpers aufliegender, durch eine auf die Mantelfläche des Filterkörpers aufgebrachte, flexible Folie gebildeter Anströmschutz und/oder Griffschutz ausgebildet ist, wobei die Folie an einer an eine Endscheibe angrenzenden Kante in die Endscheibe eingebettet ist, wobei die an die Endscheibe angrenzende Kante Öffnungen aufweist, die vom Material der Endscheibe durchsetzt sind, sowie von einem Filtersystem zur Aufnahme eines solchen Filterelements.
Mit "undurchlässig" ist nicht gemeint, dass eine Gasdiffusion durch das Material unmöglich ist, sondern vielmehr, dass das Material im Wesentlichen als eine Sperre für wirkliche Luftströmung in einem Luftfilter wirkt.

Es wird ein Filterelement vorgeschlagen, das einen Filterkörper mit einer Längsachse, dessen innere und äußere Mantelfläche für ein zu filterndes Medium, insbesondere Luft, durchlässig ist, eine erste an einer Stirnseite angeordnete offene oder geschlossene Endscheibe und eine zweite an der gegenüberliegenden Stirnseite angeordnete Endscheibe umfasst. Dabei weist die äußere Mantelfläche des Filterkörpers zumindest einen fluiddichten Bereich auf, der für das zu filternde Medium undurchlässig ist.

Das Filterelement, dessen Filterkörper bestimmungsgemäß für das zu filternde Medium durchlässig gestaltet ist und der an beiden Enden durch Endscheiben abgeschlossen wird, von denen eine Endscheibe üblicherweise für das zu filternde Medium undurchlässig ist, wird vorteilhafterweise so in einem Filtersystem angeordnet, dass das zu filternde Medium, also beispielsweise staubbeladene Luft, über einen Einlass in das Gehäuse strömt und tangential am Filterelement vorbei geleitet wird. Durch die tangentiale Anströmung des Filterelements wird die Strömung in eine um das Filterelement rotierende Bewegung, eine sogenannte Zyklonbewegung, gebracht. In dieser Zyklonvorabscheidung wirken durch die Rotation der Strömung Fliehkräfte auf mögliche gröbere Staubpartikel in der Luft, die dadurch zum großen Teil vorabgeschieden werden können. Der Bereich, in dem das zu filternde Medium auf den Filterkörper auftrifft, wird vorteilhafterweise undurchlässig für das zu filternde Medium gestaltet, damit das auftreffende Medium auch entsprechend tangential abgelenkt und nicht zum Teil in den Filterkörper geleitet wird. Außerdem kann der Strömungswiderstand, wenn dieser Bereich mit einer glatten Oberfläche gestaltet wird, für das zu filternde Medium so reduziert werden. Dazuhin wird durch die erfindungsgemäße Anordnung vermieden, dass das Filtermedium, also beispielsweise Papier, durch die auftreffenden Schwebstoff- oder Staubteilchen beschädigt wird. Da die auftreffende Strömung hohe Geschwindigkeiten aufweisen kann, könnten sonst erodierende Effekte an der Oberfläche des Filtermediums entstehen. Die axiale Ausdehnung des fluiddichten Bereichs kann dabei zweckmäßigerweise mindestens einige Millimeter über den Bereich hinausragen, in dem das einströmende Medium auf das Filterelement trifft. Bevorzugt kann die axiale Ausdehnung 5 mm bis 10 mm über den Bereich hinausragen. Damit kann das Medium auch wirksam in der ganzen Breite erfasst wird. Mindestens sollte die axiale Ausdehnung des fluiddichten Bereichs die Breite des Einlasses um einige Millimeter, bevorzugt 5 mm bis 10 mm überragen. Außerdem ist der fluiddichte Bereich günstigerweise direkt gegenüber dem Einlass auf der äußeren Mantelfläche des Filterelements angeordnet, so dass er das einströmende Medium auch voll abdeckt. Weiter weist der fluiddichte Bereich als Anströmschutz günstigerweise ein glatte Oberfläche auf, um eine möglichst homogene Umströmung des Filterkörpers sowie günstige Bedingungen zur Abscheidung der Schwebstoff- oder Staubteilchen über den Zykloneffekt zu bewirken. Diese kann durch die Ausführung in einer glatten Folie, die um den Filterkörper gelegt wird, günstig beeinflusst werden. Ein bevorzugtes Material für die Folie ist beispielsweise 0,1 - 1,0 mm starkes Polymermaterial, wie zum Beispiel Polypropylen oder Polyethylen.

Weiter bevorzugt sind der Anströmschutz und/oder der Griffschutz selbsttragend ausgebildet. Selbsttragend heißt, dass Bedienkräfte beim Wechseln des Filterelements sicher von Anströmschutz und/oder Griffschutz aufgenommen und gehalten werden können und weder zusätzliche stabilisierende, schützende oder tragende Hilfsstruktur den Anströmschutz oder den Griffschutz außen umgibt noch der Anströmschutz und/oder der Griffschutz an dieser Hilfsstruktur von außen anliegt.

Vorteilhafterweise kann der Bereich durch einen auf der äußeren Mantelfläche des Filterkörpers aufliegenden Anströmschutz und/oder Griffschutz gebildet sein. Der Bereich, der für das zu filternde Medium undurchlässig gestaltet ist, kann auf diese Weise einen Anströmschutz darstellen. Im Stand der Technik wird dieser häufig auch als Zarge oder Filterzarge bezeichnet und ist oft als zusätzliches Kunststoff- oder Blechteil in einigem Abstand um den Filterkörper am Gehäuse angespritzt oder angebracht. Gemäß der vorteilhaften Ausgestaltung kann dieser fluiddichte Bereich, der als Anströmschutz dient, je nach Einbaulage des Filterelements jedoch auch als Griffschutz dienen. Da das Filtermedium, wie beispielsweise Papier, oft sehr empfindlich auf Berührung oder Druck reagiert, ist es günstig, einen zusätzlichen Schutz zumindest an einigen Stellen auf der äußeren Mantelfläche des Filterkörpers anzubringen, an dem das Filterelement für Montage/Demontage-Zwecke beispielsweise gehalten werden kann.

So kann in einer günstigen Ausgestaltung der Erfindung der Filterkörper an einem axialen Ende einen Anströmschutz und an einem in axialer Richtung gegenüberliegenden Ende einen Griffschutz aufweisen. An diesem separaten Griffschutz kann das Filterelement beim Wechsel aus einem Filtergehäuse entnommen und ein neues Filterelement eingesetzt werden, wobei der Anströmschutz günstigerweise direkt gegenüber dem Einlass des Filtersystems auf der äußeren Mantelfläche des Filterkörpers angeordnet ist. Dabei sollte die axiale Ausdehnung des Anströmschutzes so gewählt werden, dass er die Breite des Einlasses um einige Millimeter, bevorzugt 5 mm bis 10 mm, überragt. Üblicherweise ergeben sich damit axiale Ausdehnungen des Anströmschutzes, die zwischen 20 und 40% der axialen Länge des Filterelements betragen. Bevorzugt beträgt die axiale Ausdehnungen des Anströmschutzes für ein Filterelement, welches für den Einbau in ein erfindungsgemäßes Filtersystem geeignet ist, etwa (beispielsweise 30-35%) oder genau 1/3 der Gesamtlänge des Filterelements. Die axiale Ausdehnung des Griffschutzes ist günstiger weise so zu wählen, dass das Filterelement an diesem Griffschutz auch sicher gehalten werden kann, also beispielsweise im Bereich 100 mm bis 150 mm liegt. Wenn sowohl Anströmschutz als auch Griffschutz vorgesehen sind, sollte jedoch die Gesamtlänge der axialen Ausdehnungen von Anströmschutz und Griffschutz so gewählt werden, dass zwischen beiden Folien ein bevorzugt etwa gleich langer Bereich für das zu filternde Medium durchlässig bleibt, damit auch eine genügend hohe Filterwirkung des Filtersystems gegeben ist.

Vorteilhafterweise können der Anströmschutz und/oder der Griffschutz an einer an eine Endscheibe angrenzende Kante in die Endscheibe eingebettet sein. Damit ist der Anströmschutz und/oder der Griffschutz auf günstige Weise an der äußeren Mantelfläche des Filterkörpers fixiert und kann sich auch bei entsprechenden Schwingungsanregungen, wie sie im Betrieb eines Filtersystems häufig auftreten, nicht mehr bewegen. Außerdem ist der Anströmschutz auf diese Weise automatisch durch die Endscheibe abgedichtet, was zu einer günstigen Beeinflussung des Zykloneffektes, da kein Bypass-Effekt der Strömung auftreten kann, beitragen kann. Auch könnte der Anströmschutz und/oder der Griffschutz einstückig mit den Endscheiben hergestellt, beispielsweise gespritzt werden, was wiederum eine sehr kostengünstige Produktionstechnologie ermöglicht.

In einer besonders günstigen Ausgestaltung der Erfindung kann die an die Endscheibe angrenzende Kante des Anströmschutzes und/oder Griffschutzes Öffnungen, wie beispielsweise Löcher, Zähne, Rillen oder ähnliche Strukturen aufweisen, die vom Material der Endscheibe, die typischerweise aus einem Polyurethanschaum oder einem Elastomer bestehen kann, durchsetzt sind, wodurch eine besonders innige Verbindung mit der Endscheibe auf Grund eines Verzahnungseffektes bewirkt werden kann. Bevorzugt sind die Öffnungen regelmäßig oder unregelmäßig beabstandet ringförmig umlaufende in Anström- und/oder Griffschutz eingebracht. Vorteilhafterweise sind die Öffnungen vollständig in Anström- und/oder Griffschutz eingebracht, so dass sie sich nicht zur in der Endscheibe eingebetteten Kante hin öffnen. Nur so ist ein zuverlässiger Formschluss gewährleistet. Weiter vorteilhaft sind die Öffnungen nur in dem Bereich vom Anström- und eingebracht, der von der Endscheibe insbesondere vollständig abgedeckt bzw. umgeben ist, damit eine zuverlässiger Anströmschutz sichergestellt werden kann, da schon kleine, durchströmbare Öffnungen den Vorabscheidegrad der Rotationsvorabscheidung reduzieren können.

Weiter bevorzugt ist es, wenn der Querschnitt von Anström- oder Griffschutz rein zylindrisch ist (kreiszylindrisch oder ovalzylindrisch, entsprechend der Form des Filterkörpers). Dies bedeutet, dass weder im Bereich der Endscheiben noch im von der jeweiligen Endscheibe abgewandten Ende radiale Fortsätze nach außen oder innen vorhanden sind. Ein Fortsatz am der Endscheibe abgewandten Ende könnte die umlaufende Strömung behindern, ein Fortsatz am endscheibenseitigen Ende würde zwar die Stabilität erhöhen, wäre jedoch aufwändiger herzustellen und würde, da an den Filterkörper axial angrenzend, die Gesamtlänge eines Filterelements ohne Vergrößerung der Filterfläche erhöhen.

Vorteilhafterweise kann der Anströmschutz und/oder der Griffschutz eine flexible Folie aufweisen, insbesondere durch eine flexible Folie gebildet sein, die auf die Mantelfläche des Filterkörpers aufgebracht ist. Erfindungsgemäß ist der Anströmschutz durch eine flexible Folie gebildet, die auf die Mantelfläche des Filterkörpers aufgebracht ist. Diese sogenannte Folienzarge kann sehr dünnwandig sein und deshalb Bauraum vor allem im Vergleich zu am Gehäuse angespritzten Zargen sparen. Zusätzlich ist diese Folienzarge einfach herzustellen und ein Formschluss mittels einer eingebrachten Lochung kann zwischen Endscheibe und der Folie zusätzlich realisiert werden. Außerdem ist die Folie flexibel und toleriert leichte Verformungen beim Transport oder dem Handling des Filterelementes, ohne beschädigt zu werden. Zusätzlich ist es möglich, eine Bedruckung zu Marketingzwecken auf der Folie aufzubringen. Außerdem kann die Folie transparent ausgeführt sein und somit einen Staubentfernungsvorgang beim Wiederabreinigen des Filterelements aus Recyclinggründen sichtbar machen. Die Folie könnte andererseits auch komplett eingefärbt werden, um einen bestimmten Markierungs- und/oder Wiedererkennungseffekt zu bewirken.

Günstigerweise kann die flexible Folie mit Hilfe einer in axialer Richtung verlaufenden Ultraschallschweißung gefügt werden. Eine solche Schweißung ist schnell, kostengünstig und zuverlässig durchzuführen. Außerdem ist das Risiko einer Klebeverbindung, den Filterkörper mit Klebstoff zu verunreinigen, dadurch ausgeschaltet.

Erfindungsgemäß besteht der Filterkörper aus einem zickzackförmig gefalteten (plissierten) Filterbalg und kann ringförmig geschlossen ausgeführt sein. Die Faltung kann beispielsweise durch Messerfaltung, für längere Filterkörper, oder Rotationsfaltung hergestellt werden. Der Filterbalg kann beispielsweise aus Papier oder aus Zellulose oder aus einer Mischfaser aus Kunststoff und Zellulose bestehen. Der Filterbalg kann mit glatter Oberfläche, rolliert und/oder in verschiedenen Prägeformen gestalteter Oberfläche zur Versteifung und/oder Schaffung von Hohlräumen zur Staubablagerung ausgeführt sein. Der Filterbalg kann eine Beschichtung und/oder Imprägnierung aufweisen, um Feuchtigkeit abzuweisen. Er kann alternativ auch mit Nanofasern beschichtet sein. Der Filterkörper kann weiterhin mit einem Fadenwickel strukturell versteift sein. Der Einsatz dieser Werkstoffe als Filtermedium stellt eine sehr wirtschaftliche Möglichkeit dar, ein solches Filterelement zu realisieren. Gleichzeitig bietet die beschriebene Formgestaltung eine stabile Anordnung, so dass eine selbsttragende Bauweise des Filterkörpers und damit eine günstige Montageeigenschaft gegeben ist.

Zweckmäßigerweise kann das Filterelement als Luftfilter, insbesondere als Luftfilter einer Brennkraftmaschine verwendet werden. Der sichere Betrieb von Brennkraftmaschinen beruht auch auf einer sicheren und günstigen Filterung der Ansaugluft für den Verbrennungsbetrieb. Das beschriebene Filterelement stellt dafür eine wirtschaftliche Möglichkeit dar.

Vorteilhaft ist ebenso die Verwendung des Filterelements als Partikelfilter, insbesondere als Partikelfilter einer Brennkraftmaschine. Auch hier sind die sichere Montage und wirtschaftliche Austauschbarkeit des beschriebenen Filterelements von entscheidender Bedeutung.

Die Erfindung betrifft nach einem weiteren Aspekt ein Filtersystem mit einem erfindungsgemäßen Filterelement, umfassend ein Gehäuse, welches im Wesentlichen konzentrisch um eine Längsachse aufgebaut ist, einen das Gehäuse verschließenden Deckel, der ebenfalls konzentrisch um die Längsachse aufgebaut ist, einen am Gehäuse und/oder Deckel angeordneten Einlass zum Zuführen des zu filternden Mediums, insbesondere Luft, wobei am Gehäuse konzentrisch zur Längsachse ein Auslass zur Ableitung des gefilterten Mediums vorgesehen ist, wobei am Gehäuse im Bereich des Auslasses eine Dichtungskontur vorgesehen ist, die mit einer radialen Dichtung der ersten Endscheibe des Filterelements korrespondiert, wobei das Filterelement auswechselbar in dem Gehäuse des Filtersystems angeordnet ist. Der wesentliche Vorteil eines solchen Filtersystems liegt dabei in der sicheren und stabilen Montage des Filterelements sowie einer sehr wirtschaftlichen Austauschbarkeit des Filterelements im Servicefall. Gerade bei niedrigen Standzeiten, wie sie im Land- und Baumaschineneinsatz auftreten können, ist die schnelle Austauschbarkeit von großer Bedeutung.

In einer vorteilhaften Anordnung kann ein Anströmschutz und/oder Griffschutz an einer äußeren Mantelfläche des dabei eingesetzten Filterelements angeordnet sein. Dadurch wird das Filterelement beim Anströmen durch das zu filternde Medium vor Beschädigung des Filtermediums durch Staubpartikel geschützt. Ein Griffschutz ermöglicht die Montage/Demontage des Filterelements in einfacher Weise, ohne das Filtermedium durch Berührung zu schädigen.

Vorteilhafterweise kann im Bereich des Einlasses des Filtersystems ein Zyklonabscheider vorgesehen sein und am Gehäuse oder am Deckel ein Schmutzauslass vorgesehen sein. Dieser Zyklonabscheider besteht aus einer Leitgeometrie, die das zu filternde Medium in eine Rotation versetzt. Durch diese Rotation wird der Schmutz im Bereich der Gehäusewand aufkonzentriert und an einer geeigneten Stelle über einen Schmutzauslass ausgetragen. Durch die Vorabscheidung des größten Teils an Schmutz aus der zu filternden Luft kann die Standzeit des eigentlichen Filterelements entscheidend verlängert werden.

Gemäß einer weiteren Ausgestaltung der Erfindung kann ein Sekundärelement im Inneren des Filterelements angeordnet sein. Das Sekundärelement, das aus einer tragenden Struktur in zylinderförmiger Ausgestaltung bestehen kann, die mit einem durchlässigen Filtermedium, beispielsweise einem Vlies, verkleidet ist, hat die Aufgabe, bei einem Austausch des Filterelements den Auslass des Filtersystems weiterhin verschlossen zu halten, so dass kein Schmutz in diesen Bereich eindringen kann, während das Filterelement gereinigt oder erneuert wird. Das Sekundärelement, das konzentrisch zur Längsachse des Filtersystems im Inneren des Filterelements angeordnet sein kann, ist beispielsweise über eine Schraubverbindung mit dem Gehäuse verbunden und zum Gehäuse mit einer Dichtung versehen.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: eine perspektivische Ansicht eines Filtersystems nach einem Ausführungsbeispiel der Erfindung mit tangentialem Einlass, zentrischem Auslass und bodenseitigem Schmutzauslass;
- Fig. 2: eine perspektivische Ansicht eines Filtersystems nach einem Ausführungsbeispiel der Erfindung mit radialem Einlass und zentrischem Auslass bei angeschnittenem Gehäuse und angeschnittenem Filterelement;
- Fig. 3: ein Filterelement mit einer flexiblen Folie als Anströmschutz nach einem Ausführungsbeispiel der Erfindung;
- Fig. 4: eine flexible Folie als gestanztes Halbzeug nach einem Ausführungsbeispiel der Erfindung;
- Fig. 5: eine flexible Folie als gestanztes Halbzeug endlos ultraschallgeschweißt nach einem Ausführungsbeispiel der Erfindung;

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

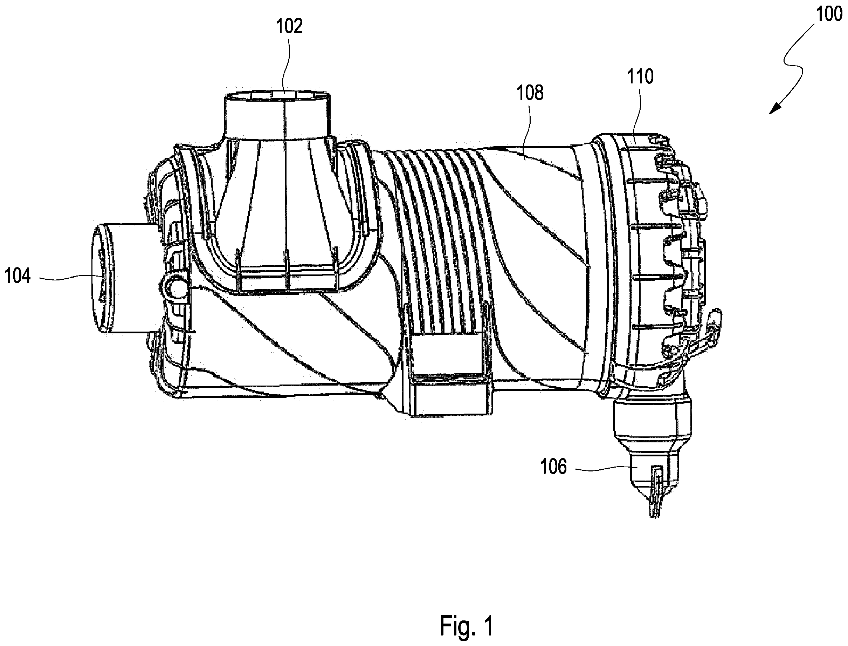

Figur 1 zeigt eine perspektivische Ansicht eines Filtersystems 100 nach einem Ausführungsbeispiel der Erfindung, das beispielsweise als Luftfilter einer Brennkraftmaschine eingesetzt sein kann, mit tangentialem Einlass 102, zentrischem Auslass 104 an einer Gehäusestirnseite und bodenseitigem Schmutzauslass 106. Dargestellt ist eine Rundfilterbauform, die aus einem Gehäuse 108 besteht, das mit einem Deckel 110, beispielsweise mit Schraub- oder Bajonettverschluss, verschlossen wird. Bei einer Verwendung als Luftfiltersystem strömt staubbeladene Luft in den Einlass 102, der tangential zum innen eingebauten Luftfilterelement angeordnet ist, so dass die Luft im Innern des Gehäuses 108 durch einen Anströmschutz am Filterelement in eine Rotationsbewegung versetzt wird. Filterelement und Anströmschutz sind in der Zeichnung nicht dargestellt. Durch den über die Rotationsbewegung der Luft bewirkten Zykloneffekt wirken Fliehkräfte auf die Staubpartikel der strömenden Luft, so dass diese sich teilweise an der Gehäusewand abscheiden und über den Schmutzauslass 106 aus dem Filtersystem 100 abströmen können. Dadurch wird das Filterelement weniger belastet, die Standzeit des Filterelements wird erhöht. Die gereinigte Luft kann über den zentrischen Auslass 104 aus dem Gehäuse 108 abgeführt werden.

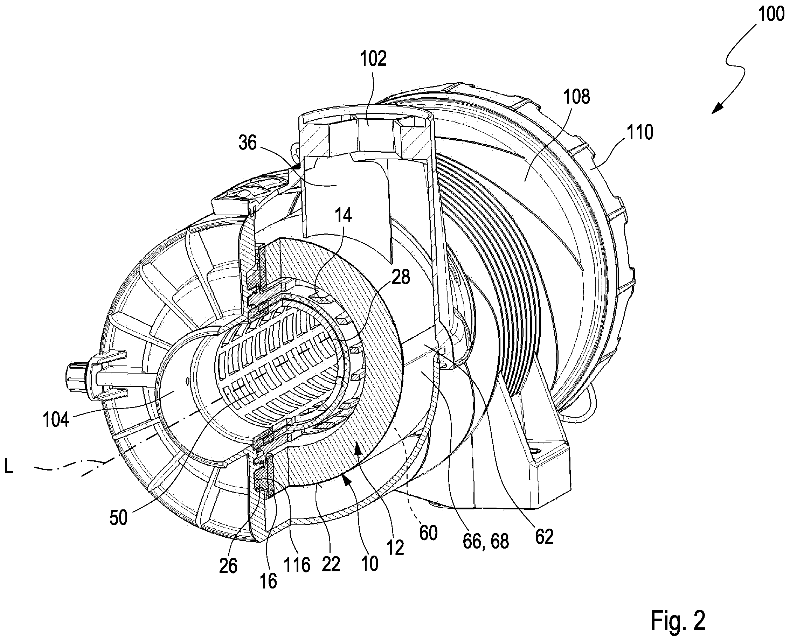

In Figur 2 ist eine perspektivische Ansicht eines Filtersystems 100 nach einem Ausführungsbeispiel der Erfindung mit radialem Einlass 102 und zentrischem Auslass 104 bei angeschnittenem Gehäuse 108 und angeschnittenem Filterelement 10 gezeigt. Man erkennt in dem angeschnittenen Gehäuse 108 das Filterelement 10, das entlang einer Längsachse L konzentrisch in dem Gehäuse angeordnet ist. Das Filterelement 10, das mit seinem angeschnittenen Filterkörper 12 dargestellt ist, weist an der äußeren Mantelfläche 22 des Filterkörpers 12 einen fluiddichten Bereich 60 auf, der für das zu filternde Medium undurchlässig ist und aus einer flexiblen Folie als Anströmschutz 66 oder Griffschutz 68 besteht. Die axiale Ausdehnung des fluiddichten Bereichs 60 ragt dabei zweckmäßigerweise mindestens einige Millimeter, bevorzugt 5 mm bis 10 mm über den Bereich hinaus, in dem das einströmende Medium auf das Filterelement 10 trifft, damit das Medium auch wirksam in der ganzen Breite erfasst wird. Mindestens sollte die axiale Ausdehnung des fluiddichten Bereichs die Breite des Einlasses 102 um einige Millimeter, bevorzugt 5 mm bis 10 mm überragen. Außerdem ist der fluiddichte Bereich günstigerweise direkt gegenüber dem Einlass 102 auf der äußeren Mantelfläche 22 des Filterelements 10 angeordnet, so dass er das einströmende Medium auch voll abdeckt. Die flexible Folie ist mit Hilfe einer in axialer Richtung verlaufenden Ultraschallschweißung 62 gefügt. Das Filterelement 10 ist mit einer ersten Endscheibe 16 als Radialdichtung 26, die mit einer Dichtungskontur 116 korrespondiert, in dem Gehäuse 108 gelagert. Im Inneren des Filterelements 10 sind ein Stützrohr 14 zur Versteifung des Gehäuses 108 und Lagerung des Filterelements 10 sowie ein Sekundärelement 28, das beim Filterelementwechsel den Auslass 104 staubdicht abschließt und im Gehäuse 108 verbleibt, konzentrisch angeordnet. Stützrohr 14 und Sekundärelement 28 sind ebenfalls angeschnitten. Am dem Auslass 104 gegenüberliegenden Ende ist das Gehäuse 108 mit einem lösbaren Deckel 110 verschlossen, über den auch ein Wechsel des Filterelements 10 vorgenommen werden kann. Der Filterkörper 12 kann an einem axialen Ende einen Anströmschutz 66 und an einem in axialer Richtung gegenüberliegenden Ende einen Griffschutz 68 aufweisen. Der Filterkörper 12 kann beispielsweise aus einem zickzackförmig gefalteten (plissierten) Filterbalg bestehen und ringförmig geschlossen ausgeführt sein. Die Faltung kann beispielsweise durch Messerfaltung, für längere Filterkörper 12, oder Rotationsfaltung hergestellt werden. Der Filterbalg kann beispielsweise aus Papier, Zellulose oder einer Mischfaser aus Kunststoff und Zellulose bestehen und mit glatter Oberfläche, rolliert und/oder in verschiedenen Prägeformen gestalteter Oberfläche zur Versteifung und/oder Schaffung von Hohlräumen zur Staubablagerung ausgeführt sein. Der Filterbalg kann eine Beschichtung und/oder Imprägnierung aufweisen, um Feuchtigkeit abzuweisen. Er kann alternativ auch mit Nanofasern beschichtet sein. Der Filterkörper 12 kann weiterhin mit einem Fadenwickel strukturell versteift sein.

Derartige Filtersysteme wie in Figur 1 und 2 dargestellt, werden üblicherweise im Baumaschinen und Landmaschinenbereich eingesetzt. Sie zeichnen sich durch große Robustheit aus und weisen wegen der hohen Filterlast kurze Standzeiten auf. Ein Filtersystem mit beladenem Filterelement muss dabei einen Gewichtszuwachs von 10 kg oder mehr tolerieren.

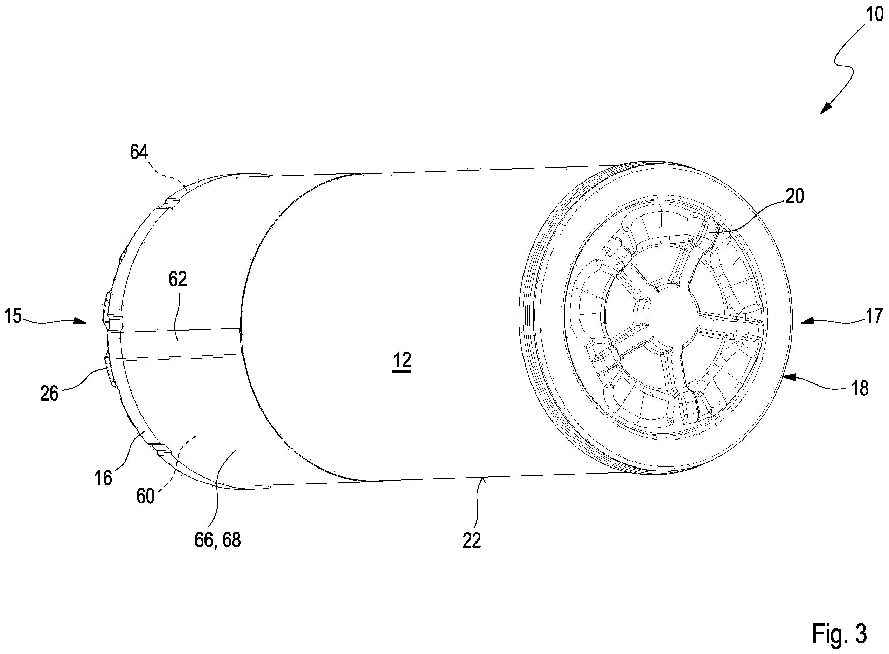

Figur 3 zeigt ein Filterelement 10 in einem Bereich 60, der für das zu filternde Medium undurchlässig ausgeführt ist, eine flexible Folie als Anströmschutz 66 oder Griffschutz 68 nach einem Ausführungsbeispiel der Erfindung. Die Folie ist in dem Bereich 60 des Filterkörpers 12 über der äußeren Mantelfläche 22 des Filterkörpers 12 angebracht und entlang einer Nahtstelle beispielsweise mit Hilfe einer Ultraschallschweißnaht 62 zu einem endlosen Halbzeug verbunden. An der oberen Stirnseite 17 ist das Filterelement 10 mit einer Endscheibe 18, die Abstütznoppen 20 zur Verspannung im Gehäuse nach Montage des Deckels aufweist, abgeschlossen. Die untere Stirnseite 15 ist mit einer Endscheibe 16 abgeschlossen, wobei der Anströmschutz 66 und/oder der Griffschutz 68 an einer an die Endscheibe 16 angrenzenden Kante in die Endscheibe 16 eingebettet ist. Dies kann noch durch Öffnungen 64, die vom Material der Endscheibe 16 durchsetzt sind und für zusätzliche Verzahnung sorgen, unterstützt werden. Alternativ kann der Filterkörper 12 auch an einem Ende eine flexible Folie als Anströmschutz 66 aufweisen und am anderen Ende eine flexible Folie als Griffschutz 68, wobei der Anströmschutz 66 günstigerweise direkt gegenüber dem Einlass 102 des Filtersystems 100 auf der äußeren Mantelfläche 22 des Filterkörpers 12 angeordnet ist. Dabei sollte die axiale Ausdehnung des Anströmschutzes 66 so gewählt werden, dass er die Breite des Einlasses 102 um einige Millimeter, bevorzugt 5 - 10 mm, überragt. Die axiale Ausdehnung des Griffschutzes 68 ist günstigerweise so zu wählen, dass das Filterelement 10 an diesem Griffschutz 68 auch sicher gehalten werden kann, also beispielsweise im Bereich 100 mm bis 150 mm liegt. Wenn sowohl Anströmschutz 66 als auch Griffschutz 68 vorgesehen sind, sollte jedoch die Gesamtlänge der axialen Ausdehnungen von Anströmschutz 66 und Griffschutz 68 so gewählt werden, dass zwischen beiden Folien ein bevorzugt etwa gleich langer Bereich für das zu filternde Medium durchlässig bleibt, damit auch eine genügend hohe Filterwirkung des Filtersystems gegeben ist.

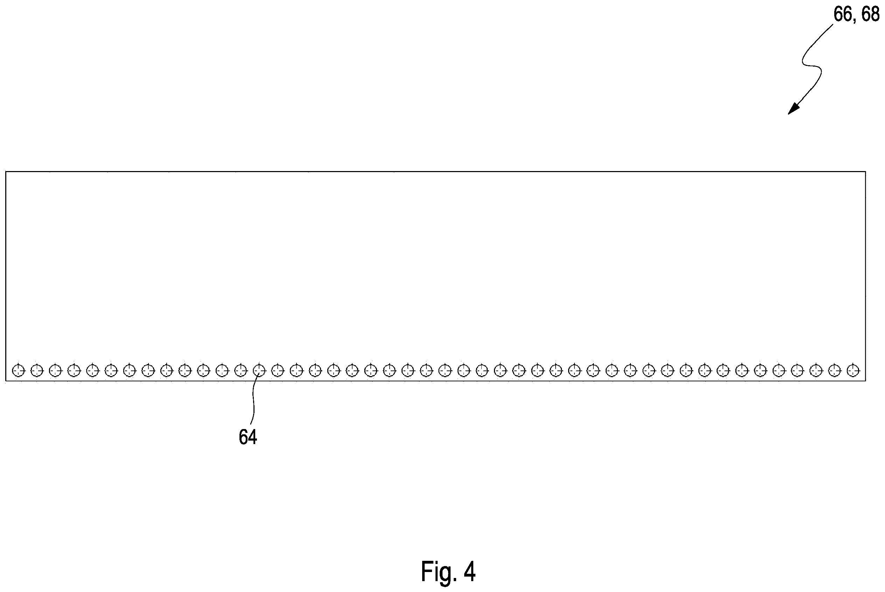

In Figur 4 ist eine flexible Folie, die nach einem Ausführungsbeispiel der Erfindung als Anströmschutz 66 und/oder Griffschutz 68 ausgestaltet sein kann, als gestanztes Halbzeug dargestellt. Die Folie kann beispielsweise von einem Band, das an einer Kante gestanzte Öffnungen 64, beispielsweise Löcher, aufweist, abgelängt sein.

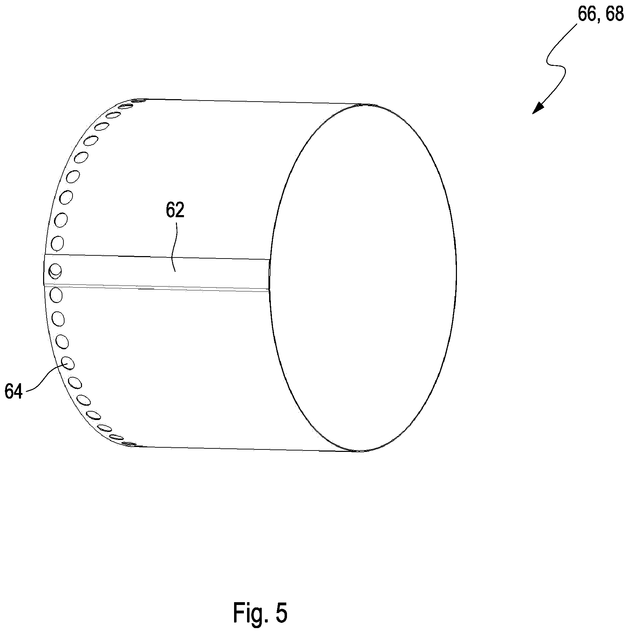

Figur 5 zeigt eine solche flexible Folie aus Figur 4 als gestanztes Halbzeug endlos ultraschallgeschweißt nach einem Ausführungsbeispiel der Erfindung. Das in Figur 4 dargestellte Band kann beispielsweise um einen zylindrischen Filterkörper geschlungen werden und dann an einer Nahtstelle in axialer Richtung mit Hilfe einer Ultraschallschweißnaht 62 verschweißt werden. Die Kante der Folie, die gestanzte Öffnungen 64, wie Löcher, aufweist, kann zweckmäßigerweise nach Anbringen der Folie auf dem Filterkörper und Verschweißen der Nahtstelle 62 in eine Endscheibe des Filterkörpers mit eingespritzt und über die gestanzten Löcher 64 sicher verzahnt werden.

## Patentansprüche

1. Filterelement (10), umfassend einen aus einem zickzackförmig gefalteten Filterbalg bestehenden Filterkörper (12) mit einer Längsachse (L), dessen innere und äußere Mantelfläche (22) für ein zu filterndes Medium, insbesondere Luft, durchlässig ist, eine erste an einer Stirnseite (15) angeordnete offene oder geschlossene Endscheibe (16) und eine zweite an der gegenüberliegenden Stirnseite (17) angeordnete Endscheibe (18), wobei die äußere Mantelfläche (22) des Filterkörpers (12) zumindest einen fluiddichten Bereich (60) aufweist, der für das zu filternde Medium undurchlässig ist, wobei der Bereich (60) durch einen auf der äußeren Mantelfläche (22) aufliegenden, insbesondere selbsttragenden Anströmschutz (66) und/oder Griffschutz (68) gebildet ist, wobei der Anströmschutz (66) und/oder Griffschutz (68) durch eine flexible Folie gebildet ist, die auf die Mantelfläche (22) des Filterkörpers (12) aufgebracht ist und an einer an eine Endscheibe (16, 18) angrenzenden Kante in eine Endscheibe (16, 18) eingebettet ist, wobei die an die Endscheibe (16, 18) angrenzende Kante Öffnungen (64) aufweist, die vom Material der Endscheibe (16, 18) durchsetzt sind.

2. Filterelement nach Anspruch 1, wobei der Filterkörper (12) an einem axialen Ende einen Anströmschutz (66) und an einem in axialer Richtung gegenüberliegenden Ende einen Griffschutz (68) aufweist.

3. Filterelement nach einem der vorhergehenden Ansprüche, wobei die flexible Folie mit Hilfe einer in axialer Richtung verlaufenden Ultraschallschweißnaht (62) gefügt ist.

4. Filterelement nach einem der vorhergehenden Ansprüche, wobei der Filterkörper (12) ringförmig geschlossen ausgeführt ist und vorzugsweise aus Papier oder aus Zellulose oder aus einer Mischfaser aus Kunststoff und Zellulose besteht.

5. Verwendung eines Filterelements (10) nach einem der vorhergehenden Ansprüche als Luftfilter, insbesondere als Luftfilter einer Brennkraftmaschine.

6. Filtersystem (100) mit einem Filterelement (10) nach einem der vorhergehenden Ansprüche 1 bis 4, umfassend
- ein Gehäuse (108), welches im Wesentlichen konzentrisch um eine Längsachse (L) aufgebaut ist,
- einen das Gehäuse (108) verschließenden Deckel (110), der ebenfalls konzentrisch um die Längsachse (L) aufgebaut ist,
- einen am Gehäuse (108) und/oder Deckel (110) angeordneten Einlass (102) zum Zuführen des zu filternden Mediums, insbesondere Luft,
wobei am Gehäuse (108) konzentrisch zur Längsachse (L) ein Auslass (104) zur Ableitung des gefiltertem Mediums vorgesehen ist, wobei am Gehäuse (108) im Bereich des Auslasses (104) eine Dichtungskontur (116) vorgesehen ist, die mit einer radialen Dichtung (26) der ersten Endscheibe (16) des Filterelements (10) korrespondiert, wobei das Filterelement (10) auswechselbar in dem Gehäuse (108) des Filtersystems (100) angeordnet ist.

7. Filtersystem nach Anspruch 6, wobei im Bereich des Einlasses (102) ein Zyklonabscheider (36) vorgesehen ist und am Gehäuse (108) oder am Deckel (110) ein Schmutzauslass (106) vorgesehen ist.

8. Filtersystem nach Anspruch 7, wobei ein Sekundärelement (28) im Inneren (50) des Filterelements (10) angeordnet ist.

9. Filtersystem nach Anspruch 8, wobei das Sekundärelement (28), mit dem Gehäuse (108) verbunden, beim Wechsel des Filterelements (10) im Gehäuse (108) verbleibt.

## Claims

1. Filter element (10), comprising a filter body (12) made of a zigzag-folded filter bellows with a longitudinal axis (L), the inner and outer circumferential surface (22) of which is permeable to a medium to be filtered, in particular to air, a first open or closed end disk (16) disposed on one front side (15) and a second end disk (18) disposed at the opposite front side (17), wherein the outer circumferential surface (22) of the filter body (12) features at least one fluid-tight area (60) which is impermeable to the medium to be filtered, wherein the area (60) is formed by an in particular self-supporting inflow protection (66) resting on the outer circumferential surface (22) and/or by a handle protection (68), wherein the inflow protection (66) and/or the handle protection (68) is formed by a flexible sheet which is applied to the circumferential surface (22) of the filter body (12) and embedded in an end disk (16, 18) at an edge adjacent to an end disk (16, 18), wherein the edge adjacent to the end disk (16, 18) features openings (64) which are penetrated by the material of the end disk (16, 18).

2. Filter element according to claim 1, wherein the filter body (12) features at one axial end an inflow protection (66) and at an end oppositely positioned in axial direction a handle protection (68).

3. Filter element according to one of the above claims, wherein the flexible sheet is joined by means of an ultrasonic welding seam (62) extending in axial direction.

4. Filter element according to one of the above claims, wherein the filter body (12) has an annularly closed design and is preferably made of paper or of cellulose or of mixed fiber made of synthetic material and cellulose.

5. Use of a filter element (10) according to one of the above claims as air filter, in particular as air filter of an internal combustion engine.

6. Filter system (100) having a filter element (10) according to one of the above claims 1 to 4.
- a housing (108) which is substantially designed concentrically around a longitudinal axis (L),
- a cover (110) closing the housing (108) which is also designed concentrically around the longitudinal axis (L),
- an inlet (102) disposed at the housing (108) and/or at the cover (110) for supplying the medium to be filtered, in particular air,
wherein an outlet (104) for discharging the filtered medium is provided at the housing (108) concentrically to the longitudinal axis (L), wherein a sealing contour (116), which corresponds with a radial sealing (26) of the first end disk (16) of the filter element (10), is provided at the housing (108) in the area of the outlet (104), wherein the filter element (10) is disposed replaceably in the housing (108) of the filter system (100).

7. Filter system according to claim 6, wherein a cyclone separator (36) is provided in the area of the inlet (102) and a dirt outlet (106) is provided at the housing (108) or at the cover (110).

8. Filter system according to claim 7, wherein a secondary element (28) is disposed inside (50) the filter element (10).

9. Filter system according to claim 8, wherein the secondary element (28), connected to the housing (108), remains in the housing (108) when the filter element (10) is replaced.

## Revendications

1. Élément filtrant (10), comprenant un corps de filtre (12) composé d'un soufflet de filtre plié en accordéon, avec un axe longitudinal (L) dont la surface d'enveloppe (22) intérieure et extérieure est perméable à un fluide à filtrer, en particulier à de l'air, un premier disque d'extrémité (16) ouvert ou fermé positionné sur une face frontale (15) et un deuxième disque d'extrémité (18) positionné sur la face frontale opposée (17), la surface d'enveloppe extérieure (22) du corps de filtre (12) étant pourvue au moins d'une zone imperméable aux fluides (60) qui est imperméable au fluide devant être filtré, la zone (60) étant formée par une protection d'afflux (66) reposant sur la surface d'enveloppe (22) extérieure et en particulier autoportante et/ou par une protection pour poignée (68), la protection d'afflux (66) et/ou la protection pour poignée (68) étant constituée d'un film flexible qui est monté sur la surface d'enveloppe (22) du corps de filtre (12) et est incorporé, sur un bord contigu à un disque d'extrémité (16, 18), dans un disque d'extrémité (16, 18), le bord contigu au disque d'extrémité (16, 18) présentant des ouvertures (64) qui sont entrelacées avec le matériau du disque d'extrémité (16, 18).

2. Élément filtrant selon la revendication 1, le corps de filtre (12) présentant une protection d'afflux (66) à une extrémité axiale et une protection pour poignée (68) à une extrémité opposée en sens axial.

3. Élément filtrant selon l'une des revendications précédentes, le film flexible étant fixé par un cordon de soudage par ultrasons (62) évoluant en sens axial.

4. Élément filtrant selon l'une des revendications précédentes, le corps de filtre (12) étant fermé sous forme annulaire et étant composé de préférence de papier ou de cellulose ou d'une fibre composite constituée de matière plastique et de cellulose.

5. Utilisation d'un élément filtrant (10) selon l'une des revendications précédentes, en tant que filtre à air, en particulier en tant que filtre à air d'un moteur à combustion interne.

6. Système de filtre (100) avec un élément filtrant (10) selon l'une des revendications 1 à 4 précédentes, comprenant
- un boîtier (108) qui est conçu de façon essentiellement concentrique autour d'un axe longitudinal (L),
- un couvercle (110) obturant le boîtier (108) et également conçu de manière concentrique autour de l'axe longitudinal (L),
- une entrée (102) placée sur le boîtier (108) et/ou sur le couvercle (110) pour faire entrer le milieu à filtrer, notamment l'air,
une sortie (104) destinée à évacuer le milieu filtré étant disposée de façon concentrique par rapport à l'axe longitudinal (L) sur le boîtier (108), un contour d'étanchéité (116) correspondant avec un joint radial (26) du premier disque d'extrémité (16) de l'élément filtrant (10) étant prévu sur le boîtier (108) dans la zone de la sortie (104), l'élément filtrant (10) étant disposé de manière échangeable dans le boîtier (108) du système de filtre (100).

7. Système de filtre selon la revendication 6, un séparateur à cyclone (36) étant prévu dans la zone de l'entrée (102) et un orifice d'évacuation des saletés (106) étant prévu sur le boîtier (108) ou sur le couvercle (110).

8. Système de filtre selon la revendication 7, un élément secondaire (28) étant disposé à l'intérieur (50) de l'élément filtrant (10).

9. Système de filtre selon la revendication 8, l'élément secondaire (28), une fois relié au boîtier (108), restant dans le boîtier (108) lors de l'échange de l'élément filtrant (10).
